# FASCICULE DE BREVET EUROPEEN

(11) **EP 1 901 937 B1**
(45) Date de publication et mention de la délivrance du brevet: **24.12.2008**
(21) Numéro de dépôt: 06779042.8
(22) Date de dépôt: 11.07.2006
(51) Int. Cl.: B60N 2/02, B60R 16/02

(54) **DISPOSITIF DE COMMUNICATION SANS FIL POUR UN ARRANGEMENT MODULABLE DE SIEGES DE VEHICULE**
DRAHTLOSE KOMMUNIKATIONSVORRICHTUNG FÜR MODULARE FAHRZEUGSITZANORDNUNG
WIRELESS COMMUNICATION DEVICE FOR MODULAR ARRANGEMENT OF VEHICLE SEATS

(30) Priorité: 13.07.2005 FR 0552173
(43) Date de publication de la demande: 26.03.2008
(73) Titulaire: Peugeot Citroën Automobiles Société Anonyme, 78140 Velizy Villacoublay (FR)
(72) Inventeur: KADIRI, El Khamis, F-78640 Neauphle le Chateau (FR)
(74) Mandataire: Vigand, Régis Louis Michel
(86) Numéro de dépôt international: PCT/FR2006/050706
(87) Numéro de publication internationale: WO 2007/007009

(56) Documents cités:
- EP-A- 1 074 425
- EP-A- 1 508 204
- WO-A-03/045780
- WO-A-03/055726
- DE-A1- 10 164 068
- DE-A1- 10 219 284
- DE-A1- 10 307 177
- FR-A- 2 383 879
- FR-A- 2 758 502
- US-A- 5 696 409
- US-A- 5 804 887
- US-A1- 2002 124 123
- US-A1- 2002 167 399
- US-B1- 6 240 352
- US-B1- 6 400 259

## Description

La présente invention concerne un dispositif de communication sans fil pour un arrangement modulable de sièges de véhicule, en particulier un dispositif de communication sans fil destiné à transmettre des informations entre ledit arrangement et une unité de commande électronique du véhicule.

Il est connu dans certains véhicules automobiles d'avoir des sièges amovibles, de façon à créer un espace de chargement supplémentaire lorsqu'ils sont totalement extraits du véhicule. Il est connu également d'avoir des arrangements de sièges dans lesquels les sièges sont modulaires, permutables et interchangeables de manière à permettre des arrangements de sièges différents en fonction des besoins. En particulier, à l'arrière du véhicule, on connaît des arrangements modulables pouvant permettre d'avoir un, deux ou trois sièges arrière ou encore deux sièges arrière et un plus petit siège arrière ou siège enfant, par exemple.

Il est devenu relativement courant d'avoir des sièges pourvus de systèmes de sécurité (un ou plusieurs airbags, tendeurs de ceinture de sécurité, etc.) actionnés ou déployés en cas d'accident. Il est également relativement courant d'avoir des sièges pourvus de capteurs ou analogues adaptés pour déterminer si le siège est occupé, et éventuellement pour classifier l'occupant du siège selon son poids. Ces moyens de déclenchement de systèmes de sécurité et ces capteurs de diagnostic envoient des signaux à un processeur central, de façon que les systèmes de sécurité soient commandés en fonction de ces signaux.

Il y a, par conséquent, nécessité d'une excellente communication entre les sièges amovibles équipés de tels systèmes de sécurité ou de diagnostic et un processeur central monté sur le véhicule.

Parmi ces moyens de communication, il est connu d'utiliser un moyen de transmission sans fil.

Ainsi, le brevet US 5,696,409 divulgue un dispositif qui fournit de la puissance électrique entre un appareil monté sur le siège de véhicule et une source d'énergie électrique dans le véhicule sans utiliser de connexions électriques. Selon ce dispositif, un transformateur pour transmettre l'énergie électrique comporte une première partie (enroulement primaire) montée sur le véhicule et une deuxième partie (enroulement secondaire) montée sur le siège du véhicule, reliée électriquement à l'appareil. Un circuit d'attaque pour exciter le transformateur est relié électriquement à la première partie et comporte un oscillateur. Dans un tel dispositif, on évite les systèmes de connexion à fiches ou à broches, qui sont relativement fastidieux à monter ou démonter avec des sièges extractibles de véhicules automobiles.

Le brevet US 6,805,375 divulgue un dispositif pour la transmission sans fil d'un signal de déclenchement pour un système d'airbag, qui comprend un transmetteur, une première unité d'évaluation, un générateur de signal de déclenchement qui envoie une commande de déclenchement à l'unité d'évaluation, une deuxième unité d'évaluation, qui reçoit le signal de commande et déclenche un circuit de déclenchement pour le système d'airbag. Il est prévu aussi une unité dite de redondance qui convertit la commande de déclenchement en un signal de redondance, et une unité de validation valide le circuit de déclenchement en fonction du signal de redondance. La redondance augmente la fiabilité en cas de déclenchement erroné du dispositif d'airbag.

Le brevet du Royaume-Uni N° 2 383 879, qui est considéré comme l'état de la technique plus proche, divulgue un dispositif de détection de siège amovible de véhicule automobile destiné à un système de sécurité automobile. Le siège, qui est monté amovible sur des rails du véhicule, comporte au moins un élément de sécurité qui a la forme d'un capteur. Un canal de communication est établi entre une unité de commande et l'élément de sécurité. Au moins une partie de ce canal de communication est une liaison sans fil. Il y a un premier système qui fournit un signal à l'unité de commande lorsque le siège est présent dans le véhicule et un système indépendant qui est séparé de la partie siège du canal de communication, pour déterminer la présence du siège dans le véhicule et fournir un signal approprié à l'unité de commande. Ainsi, l'unité de commande dispose de deux signaux indiquant la présence du siège. La fiabilité de la détection de la présence du siège est améliorée.

Mais dans tous ces dispositifs destinés à des sièges amovibles ou extractibles, la partie communicante (bobine, antenne) de la partie « caisse » du système de communication sans fil est disposée sous chaque siège, individuellement, chaque siège ayant une place déterminée et une seule. Ces dispositifs de l'art antérieur ne fonctionnent pas dans le cas d'arrangements modulables de sièges de véhicule automobile, en particulier dans le cas de permutation des sièges, de changements dans la taille des sièges ou de disposition des sièges dans le sens de l'axe des roues.

Le dispositif décrit dans le brevet précité N° 2 383 879 propose une solution pour des sièges de largeur différente, mais seulement pour une configuration restreinte. Comme indiqué plus haut, les sièges sont fixés sur des rails, ce qui ne permet pas leur déplacement le long de l'axe des roues. Pour y parvenir, il faut placer une bobine dans chaque rail, et deux antennes dans chaque siège.

Un premier but de la présente invention est de réaliser un dispositif de communication sans fil pour un arrangement modulable de sièges de véhicule, de type décrit précédemment, dans lequel chaque siège amovible ne comporte qu'un seul élément de communication (antenne), par conséquent évite le doublement mentionné ci-dessus.

Un autre but de la présente invention est de réaliser un dispositif de communication sans fil destiné à transmettre des informations entre une unité de commande électronique et une rangée de sièges amovibles séparément, en particulier une rangée de sièges amovibles arrière, qui peut être une rangée de deux sièges, en particulier transformable en une rangée de trois sièges, parmi lesquels un siège peut être de taille différente.

De manière générale, le but de la présente invention est de réaliser un dispositif de communication sans fil destiné à transmettre des informations entre une unité de commande électronique et une rangée de sièges amovibles, en particulier une rangée de sièges amovibles arrière, qui permette de préserver la modularité desdits sièges, et de minimiser le nombre et le volume des éléments communicants.

Pour atteindre ces buts, le dispositif de communication sans fil pour un arrangement modulable de sièges de véhicule, selon la présente invention, est un dispositif dans lequel ledit arrangement comprend au moins une rangée d'au moins deux sièges amovibles, chaque siège comportant deux éléments d'ancrage latéraux pour fixer ledit siège sur deux moyens d'ancrage du plancher du véhicule et comprenant un élément de communication de siège destiné à communiquer sans fil avec un élément de communication de plancher, solidaire du plancher. De plus, il est prévu un seul élément de communication de siège pour chaque siège, monté sur un élément d'ancrage du siège, et deux éléments de communication de plancher pour chaque rangée, chaque élément de communication de plancher pouvant communiquer avec deux éléments de communication de siège.

Selon un mode de réalisation préféré de l'invention, l'arrangement modulable de sièges est une rangée de deux sièges transformable en une rangée de trois sièges, l'un des deux éléments de communication de plancher communicant avec deux sièges. Dans un tel cas, les éléments d'ancrage sur lesquels sont montés les éléments de communication de siège respectifs sont proches l'un de l'autre.

Selon l'invention, des sièges identiques présentent leur élément de communication de siège sur l'élément d'ancrage du même côté, de façon à ce que lesdits sièges identiques soient permutables dans l'arrangement de sièges.

Selon l'invention également, les deux sièges latéraux de la rangée de trois sièges présentent leur élément de communication de siège d'un même côté et le siège central présente son élément de communication de siège de l'autre côté.

Egalement selon le mode de réalisation préféré de l'invention, le troisième siège peut être un siège de plus petite taille.

De plus, il est prévu quatre paires de moyens d'ancrage, avec une même distance entre deux moyens d'ancrage de la même paire, permettant ainsi une transformation d'une rangée de trois sièges en une rangée de deux sièges de moindre largeur hors tout, et seulement deux éléments de communication de plancher solidaires du plancher en regard de la première et de la troisième paire de moyens d'ancrage.

De préférence, chaque élément de communication de siège est une antenne.

Et de préférence également, chaque élément de communication de plancher est un boîtier de gestion d'antennes.

De préférence également, les deux éléments de communication de plancher de la rangée de sièges sont reliés à une unité de commande électronique du véhicule.

D'autres avantages et caractéristiques de l'invention apparaîtront dans la description qui suit d'un exemple de réalisation de l'invention, non limitatif de la portée de la présente invention, et accompagnée des dessins annexés dans lesquels :
- la figure 1 représente schématiquement une configuration d'une rangée de sièges amovibles avec trois sièges dont un de taille plus petite, et l'emplacement des éléments communicants selon la présente invention,
- la figure 2 représente schématiquement le même dispositif pour une configuration modifiée de deux sièges amovibles seulement,

Dans la présente description, le terme « amovible » appliqué à un siège de véhicule signifie que le siège peut être extrait totalement du véhicule.

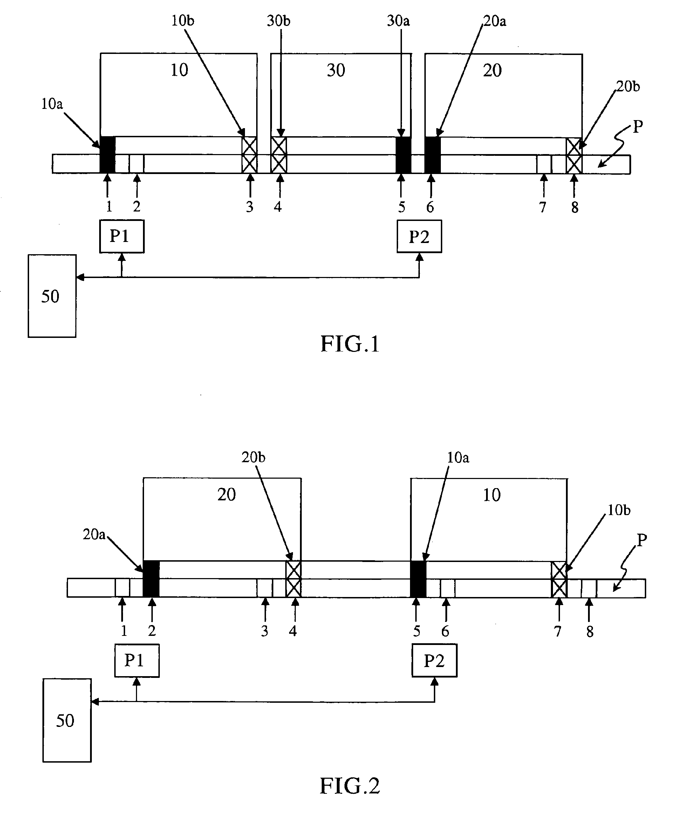

Sur le dessin de la figure 1, le plancher très schématisé P d'un véhicule automobile est équipé de quatre paires de moyens d'ancrage ou bols référencés 1-2, 3-4, 5-6, et 7-8 le long de l'axe perpendiculaire à l'axe longitudinal du véhicule. Ces moyens d'ancrage permettent la fixation amovible des sièges. Sur cette figure 1 sont représentés, de manière très schématique, trois sièges 10, 20 et 30, montés amovibles sur les paires de bols 1 à 8. Le siège 10 est monté sur les bols 1 et 3, le siège 30 sur les bols 4 et 5, et le siège 20 sur les bols 6 et 8. Le siège 30, disposé entre les sièges 10 et 20, est un siège de plus petite taille que ces derniers.

Ces trois sièges 10, 20 et 30, peuvent être, par exemple, trois sièges d'une rangée de sièges arrière de véhicule automobile.

Chaque siège 10, 20, 30, est équipé d'un élément de communication de siège 10a, 20a, 30a, respectivement, qui s'engage dans un bol du plancher, à savoir 1, 6, 5, respectivement, et d'un élément supplémentaire 10b, 20b, 30b, qui s'engage dans un autre bol du plancher, à savoir 3, 8, 4. respectivement.

Dans la partie plancher sont logés deux éléments de communication de plancher P1 et P2, qui font face aux paires de bols 1-2 et 5-6, respectivement. L'élément de communication de plancher P1 réalise un canal de communication sans fil avec tout élément de communication de siège qui se trouve dans l'un et/ou l'autre des bols 1 et 2, tandis que l'élément de communication de plancher P2 réalise un canal de communication sans fil avec tout élément de communication de siège qui se trouve dans l'un et/ou l'autre des bols 5 et 6. Comme on peut le voir sur le dessin de la figure 1, P1 communique avec l'élément 10a du siège 10 et P2 communique avec les éléments 30a et 20a des sièges 30 et 20, respectivement. Il est ainsi créé un système de communication pour faire communiquer les trois sièges 10, 20 et 30, tels que disposés selon l'arrangement de la figure 1, avec l'unité de commande électronique 50 grâce à un seul élément de communication de siège par siège et seulement deux éléments de communication de plancher, à savoir P1 et P2, pour toute la rangée des trois sièges 10, 20 et 30.

Comme on le voit sur le dessin de la figure 1, les deux sièges latéraux 10 et 20 de la rangée de trois sièges présentent leur élément de communication de siège d'un même côté, à savoir 10a et 20a sont du même côté gauche sur la figure 1, et le siège central 30 présente son élément de communication de siège 30a de l'autre côté, à savoir du côté droit sur la figure 1.

Sur le dessin de la figure 2, on a représenté un autre arrangement de la rangée de sièges modulable, qui comprend seulement les deux sièges 10 et 20 de la figure 1. Le siège 30 a été extrait. Les deux sièges 10 et 20 identiques ont été permutés. Le siège 10 est fixé sur le plancher au moyen des bols 5 et 7, tandis que le siège 20 est fixé au plancher au moyen des bols 2 et 4. L'élément de communication de siège 10a du siège 10 est situé dans le bol 5 et communique avec l'élément de communication de plancher P2, lequel reste dans sa position fixe de la figure 1 et peut réaliser un canal de communication sans fil avec tout élément de communication de siège dans l'un des bols 5 et 6. L'élément de communication de siège 20a du siège 20 est situé dans le bol 2 et communique avec l'élément de communication de plancher P1, lequel reste dans sa position fixe de la figure 1 et peut réaliser un canal de communication sans fil avec tout élément de communication de siège dans l'un des bols 1 et 2.

Dans la configuration « deux sièges » de la figure 2, chaque élément de communication de plancher P1, P2, gère un élément de communication de siège 20a, 10a, respectivement, tandis que dans la configuration « trois sièges » de la figure 1, un élément de communication de plancher P1 gère un élément de communication de siège 10a et l'autre élément de communication de plancher P2 gère deux éléments de communication 30a et 20a.

De manière connue en soi, les éléments de communication de siège 10a, 20a 30a, sont des transpondeurs ou antennes ou tags et les éléments de communication de plancher P1, P2, sont des dispositifs actifs ou boîtiers de gestion d'antennes, émetteurs de fréquences qui activent les transpondeurs en leur fournissant de l'énergie à distance.

On notera que les sièges identiques, par exemple les sièges 10 et 20, présentent leur élément de communication de siège, 10a, respectivement 20a, sur l'élément d'ancrage situé du même côté, de façon à ce que lesdits sièges identiques, 10 et 20, soient permutables dans l'arrangement de sièges.

On voit aisément combien une telle disposition des éléments de communication des sièges amovibles et des parties fixes permet de profiter des avantages de la modularité de l'arrangement de sièges arrière d'un véhicule automobile, en minimisant le nombre et le volume desdits éléments de communication.

L'invention est applicable à un arrangement de deux rangées de sièges amovibles, par exemple, chaque rangée étant équipée des moyens de communication sans fil décrits ci-dessus.

## Revendications

1. Dispositif de communication sans fil entre un arrangement modulable de sièges de véhicule et une unité de commande électronique (50), ledit arrangement comprenant au moins une rangée d'au moins deux sièges amovibles (10, 20), chaque siège (10, 20) comportant deux éléments d'ancrage latéraux pour fixer ledit siège sur deux moyens d'ancrage d'une pluralité de moyens d'ancrage (1à 8) du plancher (P) du véhicule et comprenant un élément de communication de siège (10a, 20a) destiné à communiquer sans fil avec un élément de communication de plancher (P1, P2), solidaire du plancher (P), **caractérisé en qu'**il est prévu un seul élément de communication de siège (10a, 20a) par siège (10, 20), monté sur un élément d'ancrage dudit siège, et deux éléments de communication de plancher (P1, P2) par rangée, chaque élément de communication de plancher (P1, P2) pouvant communiquer avec deux éléments de communication de siège.

2. Dispositif selon la revendication 1, **caractérisé en ce que** ledit arrangement modulable de sièges de véhicule est une rangée de deux sièges (10, 20) transformable en une rangée de trois sièges (10, 20, 30), l'un des deux éléments de communication de plancher (P2) communicant avec deux éléments de communication de siège (20a, 30a).

3. Dispositif selon la revendication 2, **caractérisé en ce que** des sièges identiques (10, 20) présentent leur élément de communication de siège (10a, 20a) sur l'élément d'ancrage du même côté, de façon à ce que lesdits sièges identiques (10, 20) soient permutables dans l'arrangement de sièges.

4. Dispositif selon l'une quelconque des revendications 2 et 3, **caractérisé en ce que** les deux sièges latéraux (10, 20) de la rangée de trois sièges présentent leur élément de communication de siège (10a, 20a) d'un même côté et le siège central (30) présente son élément de communication de siège (30a) de l'autre côté.

5. Dispositif selon l'une quelconque des revendications 2 à 4, **caractérisé en ce que** le troisième siège (30) est un siège de plus petite taille que les autres sièges (10, 20).

6. Dispositif selon la revendication 2 **caractérisé en ce qu'**il est prévu quatre paires de moyens d'ancrage (1-2, 3-4, 5-6, 7-8), avec une même distance entre deux moyens d'ancrage de la même paire, permettant une transformation d'une rangée de trois sièges (10, 20, 30) en une rangée de deux sièges (10, 20) de moindre largeur hors tout, et seulement deux éléments de communication de plancher (P1, P2) solidaires du plancher (P) en regard de la première (1-2) et de la troisième paire (5-6) de moyens d'ancrage.

7. Dispositif selon l'une quelconque des revendications 1 à 6, **caractérisé en ce que** chaque élément de communication de siège (10a, 20a, 30a) est une antenne de type transpondeur.

8. Dispositif selon l'une quelconque des revendications 1 à 7, **caractérisé en ce que** chaque élément de communication de plancher (P1, P2) est un boîtier de gestion d'antennes émetteur de fréquence.

9. Dispositif selon l'une quelconque des revendications 1 à 8, **caractérisé en ce que** les deux éléments de communication de plancher (P1, P2) sont reliés à une unité de commande électronique (50) du véhicule.

10. Dispositif selon l'une quelconque des revendications 1 à 9, **caractérisé en ce que** l'arrangement de sièges est une rangée de sièges arrière.

## Claims

1. Device for wireless communication between an alterable arrangement of vehicle seats and an electronic control unit (50), the said arrangement comprising at least one row of at least two removable seats (10, 20), each seat (10, 20) comprising two lateral anchoring elements for fixing the said seat on two anchoring means of a plurality of anchoring means (1 to 8) of the floor (P) of the vehicle and comprising a seat communication element (10a, 20a) intended to communicate wirelessly with a floor communication element (P1, P2), secured to the floor (P), **characterized in that** there is provided a single seat communication element (10a, 20a) per seat (10, 20), mounted on an anchoring element of the said seat, and two floor communication elements (P1, P2) per row, each floor communication element (P1, P2) being able to communicate with two seat communication elements.

2. Device according to Claim 1, **characterized in that** the said alterable arrangement of vehicle seats is a row of two seats (10, 20) that is transformable into a row of three seats (10, 20, 30), one of the two floor communication elements (P2) communicating with two seat communication elements (20a, 30a).

3. Device according to Claim 2, **characterized in that** identical seats (10, 20) exhibit their seat communication element (10a, 20a) on the anchoring element on the same side, in such a way that the said identical seats (10, 20) are permutable in the arrangement of seats.

4. Device according to any one of Claims 2 and 3, **characterized in that** the two lateral seats (10, 20) of the row of three seats exhibit their seat communication element (10a, 20a) on one and the same side and the central seat (30) exhibits its seat communication element (30a) on the other side.

5. Device according to any one of Claims 2 to 4, **characterized in that** the third seat (30) is a seat of smaller size than the other seats (10, 20).

6. Device according to Claim 2 **characterized in that** there are provided four pairs of anchoring means (1-2, 3-4, 5-6, 7-8), with one and the same distance between two anchoring means of the same pair, allowing a transformation of a row of three seats (10, 20, 30) into a row of two seats (10, 20) of lesser overall width, and only two floor communication elements (P1, P2) secured to the floor (P) facing the first (1-2) and the third pair (5-6) of anchoring means.

7. Device according to any one of Claims 1 to 6, **characterized in that** each seat communication element (10a, 20a, 30a) is an antenna of transponder type.

8. Device according to any one of Claims 1 to 7, **characterized in that** each floor communication element (P1, P2) is a frequency emitter antenna management box.

9. Device according to any one of Claims 1 to 8, **characterized in that** the two floor communication elements (P1, P2) are linked to an electronic control unit (50) of the vehicle.

10. Device according to any one of Claims 1 to 9, **characterized in that** the arrangement of seats is a row of rear seats.

## Patentansprüche

1. Drahtlose Kommunikationsvorrichtung zwischen einer modularen Fahrzeugsitzanordnung und einer elektronischen Steuereinheit (50), wobei die Anordnung mindestens eine Reihe von mindestens zwei abnehmbaren Sitzen (10, 20) umfasst, wobei jeder Sitz (10, 20) zwei seitliche Verankerungselemente, um den Sitz auf zwei Verankerungsmitteln einer Vielzahl von Verankerungsmitteln (1 bis 8) des Bodens (P) des Fahrzeugs zu befestigen, und ein Sitzkommunikationselement (10a, 20a) umfasst, das dazu bestimmt ist, drahtlos mit einem mit dem Boden (P) verbundenen Bodenkommunikationselement (P1, P2) zu kommunizieren, **dadurch gekennzeichnet, dass** nur ein Sitzkommunikationselement (10a, 20a) pro Sitz (10, 20) vorgesehen ist, das auf einem Verankerungselement des Sitzes montiert ist, und zwei Bodenkommunikationselemente (P1, P2) pro Reihe vorgesehen sind, wobei jedes Bodenkommunikationselement (P1, P2) mit zwei Sitzkommunikationselementen kommunizieren kann.

2. Vorrichtung nach Anspruch 1, **dadurch gekennzeichnet, dass** die modulare Fahrzeugsitzanordnung eine Reihe von zwei Sitzen (10, 20) ist, die zu einer Reihe von drei Sitzen (10, 20, 30) umgebaut werden kann, wobei eines der beiden Bodenkommunikationsmittel (P2) mit zwei Sitzkommunikationsmitteln (20a, 30a) kommuniziert.

3. Vorrichtung nach Anspruch 2, **dadurch gekennzeichnet, dass** identische Sitze (10, 20) ihr Sitzkommunikationsmittel (10a, 20a) auf dem Verankerungselement derselben Seite haben, so dass die identischen Sitze (10, 20) in der Sitzanordnung austauschbar sind.

4. Vorrichtung nach einem der Ansprüche 2 und 3, **dadurch gekennzeichnet, dass** die beiden seitlichen Sitze (10, 20) der Reihe von drei Sitzen ihr Sitzkommunikationsmittel (10a, 20a) auf einer selben Seite haben, und dass der mittlere Sitz (30) sein Sitzkommunikationsmittel (30a) auf der anderen Seite hat.

5. Vorrichtung nach einem der Ansprüche 2 bis 4, **dadurch gekennzeichnet, dass** der dritte Sitz (30) ein kleinerer Sitz als die anderen Sitze (10, 20) ist.

6. Vorrichtung nach Anspruch 2, **dadurch gekennzeichnet, dass** vier Paare von Verankerungsmitteln (1-2, 3-4, 5-6, 7-8) mit einem selben Abstand zwischen zwei Verankerungsmitteln desselben Paare vorgesehen sind, wodurch eine Umwandlung einer Reihe von drei Sitzen (10, 20, 30) zu einer Reihe von zwei Sitzen (10, 20) von geringerer Gesamtbreite möglich ist, und nur zwei mit dem Boden (P) verbundene Bodenkommunikationsmittel (P1, P2) gegenüber dem ersten (1-2) und dem dritten (5-6) Paar von Verankerungsmitteln vorgesehen sind.

7. Vorrichtung nach einem der Ansprüche 1 bis 6, **dadurch gekennzeichnet, dass** jedes Sitzkommunikationsmittel (10a, 20a, 30a) eine Antenne des Typs Transponder ist.

8. Vorrichtung nach einem der Ansprüche 1 bis 7, **dadurch gekennzeichnet, dass** jedes Bodenkommunikationsmittel (P1, P2) ein Gehäuse zur Steuerung von Frequenzsendeantennen ist.

9. Vorrichtung nach einem der Ansprüche 1 bis 8, **dadurch gekennzeichnet, dass** die beiden Bodenkommunikationsmittel (P1, P2) mit einer elektronischen Steuereinheit (50) des Fahrzeugs verbunden sind.

10. Vorrichtung nach einem der Ansprüche 1 bis 9, **dadurch gekennzeichnet, dass** die Sitzanordnung eine Rücksitzreihe ist.
